# EUROPÄISCHE PATENTANMELDUNG

(11) **EP 1 249 779 A2**
(43) Veröffentlichungstag der Anmeldung: **16.10.2002**
(21) Anmeldenummer: 02002857.7
(22) Anmeldetag: 08.02.2002
(51) Int. Cl.: G06F 17/60

(54) **Verfahren zum Nachweis der Zustellung von Emails**

(30) Priorität: 08.02.2001 DE 10106096
(71) Anmelder: Wendenburg, Jan, 44797 Bochum (DE)
(72) Erfinder: Wendenburg, Jan, 44797 Bochum (DE); Dahm, Percy, 44755 Castrop-Rauxel (DE)
(74) Vertreter: Stute, Ivo, Dipl.-Ing.

(57) **Zusammenfassung**

Um einem Absender einer e-Mail einen sicheren Nachweis für die Zustellung seiner e-Mail von einem ersten e-Mail-Server an mindestens einen zweiten e-Mail-Server und/oder an den Empfänger des e-Mails zu geben, wird ein Verfahren vorgeschlagen, bei dem vom ersten e-Mail-Server ein Log-Datensatz erstellt wird, wobei in den Log-Datensatz zum einen eine die e-Mail eindeutig identifizierende Angabe und zum anderen Angaben über eine Empfangszeit und die Adresse des zweiten e-Mail-Servers geschrieben werden, und der Log-Datensatz an den Absender zurück gesandt wird.

## Beschreibung

Die Erfindung betrifft ein Verfahren zum Nachweis der Zustellung von e-Mails eines Absenders von einem ersten e-Mail-Server an mindestens einen zweiten e-Mail-Server und/oder an den Empfänger des e-Mails.

Die heutige Datentechnik ermöglicht es, weitestgehend alle Dokumente, die früher per Post versandt worden sind, elektronisch per e-Mail zu versenden. Während aber der Zugang eines Schriftstücks bei einem Empfänger per Post für den Absender nachweisbar ist, wenn er beispielsweise ein Dokument per Einschreiben mit Rückschein oder als Einwurfeinschreiben versendet, ist der Zugang eines e-Mails bei einem Empfänger nur schwer nachweisbar.

So bekommt zwar ein Absender in der Regel von dem SMTP-Server, über den er seine e-Mail verschickt, eine Nachricht darüber, dass seine e-Mail nicht an einen Empfänger-Server zugestellt werden konnte, beispielsweise weil die angegebene Empfängeradresse falsch geschrieben ist und nicht existiert. Diese Nachricht erhält der Absender aber häufig erst mit einer erheblichen Zeitverzögerung, so dass er lange Zeit nichts von der nicht erfolgten Zustellung erfährt.

Es gibt clientbasierte e-Mailsoftware wie beispielsweise Microsoft Outlook oder Lotus Notes, bei der der Nachweis über die Zustellung einer e-Mail darüber erbracht wird, dass eine mit dieser Software versandte e-Mail eine automatisierte Anfrage an die Clientsoftware des Empfängers enthält, eine kurze Mitteilung über den Zugang und das Öffnen der versandten e-Mail an den Absender zurückzusenden. Sofern der Empfänger des e-Mails seine eigene Client-Software so eingerichtet hat, dass diese auf eine solche Anfrage entsprechend automatisch reagiert, bekommt der Absender eine entsprechende Meldung zugesandt, so dass er von dem tatsächlichen Zugang des e-Mails beim Empfänger ausgehen kann.

Solche Antwortsysteme funktionieren aber nur dann, wenn die e-Mail-Software des Empfängers mit der des Absenders kompatibel ist und sowohl der Absender als auch der Empfänger diese Automatismen in ihrer Software eingeschaltet haben. Dass die Kompatibilität der e-Mail-Software des Absenders mit der des Empfängers derart kompatibel ist, ist nur selten der Fall.

Vor diesem Hintergrund ist es die Aufgabe der Erfindung, dem Absender eine Nachweismöglichkeit für die Zustellung seiner e-Mail an den Empfänger zu ermöglichen.

Diese Aufgabe wird mit einem Verfahren der eingangs genannten Art gelöst, bei dem vom ersten e-Mail-Server ein Log-Datensatz erstellt wird, wobei in den Log-Datensatz zum einen eine die e-Mail eindeutig identifizierende Angabe und zum anderen Angaben über eine Empfangszeit und die Adresse des zweiten e-Mail-Servers geschrieben werden und der Log-Datensatz an den Absender zurückgesandt wird.

Ein wesentlicher Grundgedanke der Erfindung besteht darin, dass der Nachweis über den Zugang der e-Mail unabhängig von der e-Mailsoftware des Empfängers ist. So wird der Nachweis über den Zugang der e-Mail ausschließlich über die für den e-Mail-Versand zuständigen e-Mailserver, insbesondere die an das Internet angeschlossenen SMTP-Server, durchgeführt wird. Ein einfacher Nachweis der Zustellung wird bereits dadurch möglich, dass der erste SMTP-Server, der für den Versand des an den zweiten SMTP-Server auf der Empfängerseite zuständig ist, protokolliert, welche e-Mail an den zweiten e-Mailserver versand worden ist, welche Adresse der zweite e-Mailserver hat und wann die Übermittlung vollständig abgeschlossen worden ist. Diese Daten werden dann in einen für das e-Mail spezifischen Log-Datensatz geschrieben und an den Absender zurückgesandt. Zwar kann der Absender mit diesen Angaben nicht nachweisen, dass der Empfänger die e-Mail tatsächlich erhalten und geöffnet hat, aber er kann nachweisen, dass die e-Mail in den Zugriffsbereich des Empfängers gelangt ist. Die Qualität eines solchen Übermittlungsnachweises entspricht der eines Einwurfeinschreibens, bei der der Absender zwar ebenso nicht weiß, ob der Empfänger die Post erhalten hat, bei dem der Absender aber weiß, dass die Post in den Zugriffsbereich des Empfängers gelangt ist.

Der wesentliche Vorteil der erfindungsgemäßen Verfahrensweise besteht somit darin, dass der Nachweis über die für den e-Mail-Versand zuständigen Server und nicht über den Empfänger selbst erfolgt.

In einer bevorzugten Ausgestaltung des erfindungsgemäßen Verfahrens wird die Angabe zur eindeutigen Identifizierung des e-Mails vom zweiten e-Mail-Server erzeugt und an den ersten e-Mail-Server nach Erhalt der e-Mail zurückgesandt wird. Insbesondere ist es von Vorteil, wenn die Angabe zur eindeutigen Identifizierung ein Prüfzifferncode ist, der aus dem e-Mail-Datensatz errechnet wird. Werden diese Angaben vom zweiten e-Mail-Server, also dem Server auf der Empfängerseite erzeugt, erhält die Qualität des Zugangsnachweises die eines Einschreibens mit Rückschein, wobei der Rückschein als empfängerseitiger Nachweis für den Zugang des e-Mails im Zugriffsbereich des Empfängers zu werten ist. Man kann dies vergleichen mit der Unterzeichnung eines Einschreibens mit Rückschein an einen Mitarbeiter eines Unternehmens in einer Postannahmestelle dieses Unternehmens, bei dem tatsächlich nicht sichergestellt ist, ob der Empfänger das Einschreiben tatsächlich erhalten hat.

In einer darüber hinaus bevorzugten Ausbildung des Verfahrens werden die Angaben zur Empfangszeit vom zweiten e-Mail-Server an den ersten e-Mail-Server gesandt. Somit wird für den Absender der empfangsseitige Nachweis erbracht, wann die e-Mail in den Zugriffsbereich des Empfängers gelangt ist.

Der Zugang des e-Mails beim tatsächlichen Empfänger lässt sich serverseitig dann nachweisen, wenn der Empfangszeitpunkt der Zeitpunkt ist, an dem die e-Mail vom Empfänger aus dem an den zweiten e-Mail-Server angeschlossenen Postfach-Server abgeholt wird, wobei der Postfach-Server eine Nachricht über den Empfangszeitpunkt an den zweiten e-Mail-Server übermittelt, und diese Angabe vom zweiten Empfangs-Server an den ersten e-Mail-Server übermittelt wird. Mit der Angabe über den Empfangszeitpunkt beim Empfänger erhält der an den Absender übermittelte Log-Datensatz einen Nachweis in der Qualität eines an den Empfänger selbst überbrachten Einschreibens mit Rückschein.

Damit der Absender vollständig über den Stand der Übermittlung seines e-Mails an den Empfänger informiert wird, kann es sinnvoll sein, dass neben der Empfangszeit des e-Mails beim Empfänger auch die Empfangszeit des e-Mails beim zweiten e-Mail-Server in den Log-Datensatz geschrieben wird. Es ist in diesem Zusammenhang auch möglich, dass zu jedem der beiden Empfangszeitpunkte jeweils ein Log-Datensatz erstellt wird.

In einer weiteren bevorzugten Ausgestaltung des Verfahrens, bei dem der zweite e-Mail-Server an den ersten e-Mail-Server sowohl einen Prüfzifferncode zur eindeutigen Identifizierung des übersandten e-Mails sowie Angaben über den Empfangszeitpunkt versendet, wird aus dem Prüfzifferncode und der Empfangszeit ein Signaturcode errechnet, der Signaturcode mit einem privaten Schlüssel zu einem Signaturschlüssel kodiert und der Signaturschlüssel zusammen mit dem Prüfzifferncode und der Zeitangabe an den ersten e-Mailserver zurückgesandt, und der Signaturschlüssel in den Log-Datensatz geschrieben. Über eine solche Zeitsignierung kann ein eindeutiger Nachweis der Empfangszeit erstellt werden, der einen besonders hohen Beweischarakter hat. Zur Zeitsignatur können insbesondere Signierboxen, wie sie in der deutschen Zeitschrift CT, 11/98, "Echtzeits-Zertifikate", bekannt sind, verwendet werden.

Sollte der zweite e-Mailserver nicht in der Lage sein, eigene Angaben über den Empfang des e-Mails an den ersten e-Mail-Server zurückzusenden, kann es sinnvoll sein, wenn in den Log-Datensatz Angaben über die Art der Verbindung zwischen erstem und zweitem e-Mail-Server geschrieben werden. So ist es dann sinnvoll, wenn der Absender hierdurch erfährt, ob der e-Mailversand über eine gesicherte ssl-Verbindung erfolgt ist, so dass er sicher sein kann, dass der zweite e-Mail-Server tatsächlich der gewünschte Empfangsserver ist.

## Patentansprüche

1. Verfahren zum Nachweis der Zustellung einer e-Mail eines Absenders von einem ersten e-Mail-Server an mindestens einen zweiten e-Mail-Server und/oder an den Empfänger des e-Mails, bei dem vom ersten e-Mail-Server ein Log-Datensatz erstellt wird, wobei in den Log-Datensatz zum einen eine die e-Mail eindeutig identifizierende Angabe und zum anderen Angaben über eine Empfangszeit und die Adresse des zweiten e-Mail-Servers geschrieben werden und der Log-Datensatz an den Absender zurückgesandt wird.

2. Verfahren nach Anspruch 1, **dadurch gekennzeichnet, dass** die Angabe zur eindeutigen Identifizierung des e-Mails vom zweiten e-Mail-Server erzeugt und an den ersten e-Mail-Server nach Erhalt der e-Mail zurückgesandt wird.

3. Verfahren nach Anspruch 1 oder 2, **dadurch gekennzeichnet, dass** die Angabe zur eindeutigen Identifizierung ein Prüfzifferncode ist, der aus dem e-Mail-Datensatz errechnet wird.

4. Verfahren nach einem der Ansprüche 1 bis 3, **dadurch gekennzeichnet, dass** die Angaben zur Empfangszeit vom zweiten e-Mail-Server an den ersten e-Mail-Server an den ersten e-Mail-Server gesandt werden.

5. Verfahren nach Anspruch 4, **dadurch gekennzeichnet, dass** der Empfangszeitpunkt der Zeitpunkt ist, an dem die e-Mail vom Empfänger aus dem an den zweiten e-Mail-Server angeschlossenen Postfach-Server abgeholt wird, wobei der Postfach-Server eine Nachricht über den Empfangszeitpunkt an den zweiten e-Mail-Server übermittelt, und diese Angabe vom zweiten Empfangs-Server an den ersten e-Mail-Server übermittelt wird.

6. Verfahren nach Anspruch 5, **dadurch gekennzeichnet, dass** neben der Empfangszeit des e-Mails beim Empfänger auch die Empfangszeit des e-Mails beim zweiten e-Mail-Server in den Log-Datensatz geschrieben wird.

7. Verfahren nach dem auf Anspruch 2 rückbezogenen Anspruch 3 und einem der Ansprüche 4 bis 6, **dadurch gekennzeichnet, dass** aus dem Prüfzifferncode und der Empfangszeit ein Signaturcode errechnet, der Signaturcode mit einem privaten Schlüssel zu einem Signaturschlüssel kodiert wird, und der Signaturschlüssel zusammen mit dem Prüfzifferncode, der Zeitangabe an den ersten e-Mailserver zurückgesandt wird, und der Signaturschlüssel in den Log-Datensatz geschrieben wird.

8. Verfahren nach einem der vorstehenden Ansprüche, **dadurch gekennzeichnet, dass** in den Log-Datensatz Angaben über die Art der Verbindung zwischen erstem und zweitem e-Mail-Server geschrieben werden.
